# NEUE EUROPÄISCHE PATENTSCHRIFT

(11) **EP 3 450 287 B2**
(45) Veröffentlichungstag und Bekanntmachung des Hinweises auf die Entscheidung über den Einspruch: **15.11.2023**
(45) Hinweis auf die Patenterteilung: 27.05.2020
(21) Anmeldenummer: 18184983.7
(22) Anmeldetag: 23.07.2018
(51) Int. Cl.: B62J 1/02

(54) **FAHRRADSATTEL**
BICYCLE SADDLE
SELLE DE BICYCLETTE

(30) Priorität: 29.08.2017 DE 202017004489 U
(43) Veröffentlichungstag der Anmeldung: 06.03.2019
(73) Patentinhaber: Ergon International GmbH, 56070 Koblenz (DE)
(72) Erfinder: KRAUSE, Andreas, 56068 Koblenz (DE); JIMENEZ, Juan, 53111 Bonn (DE)
(74) Vertreter: dompatent von Kreisler Selting Werner - Partnerschaft von Patent- und Rechtsanwälten mbB

(56) Entgegenhaltungen:
- EP-A1- 1 977 962
- CN-B- 104 773 232
- DE-U1-202005 007 672
- DE-U1-202005 013 749

## Beschreibung

Die Erfindung betrifft einen Fahrradsattel.

Fahrradsättel sind über ein an einer Unterseite einer Sattelschale angeordnetes Sattelgestell mit einer Sattelstütze verbunden. Auf der Oberseite der Sattelschale ist ein Sattelpolster zur Dämpfung angeordnet. Das Sattelpolster ist üblicherweise von einer Deckschicht oder einem Überzug bedeckt bzw. überspannt. Zur Verbesserung des Komforts von Fahrradsätteln besteht eine Vielzahl unterschiedlicher Ausgestaltungen von Fahrradsätteln. Beispielsweise sind innerhalb des Sitzpolsters Gelpads zur Verbesserung des Komforts angeordnet. Ebenso ist es bekannt, beispielsweise zwischen dem Sattelgestell und der Sattelschale insbesondere im Bereich der Sattelrückseite Dämpfungselemente vorzusehen. Die unterschiedlichsten Arten von Fahrradsätteln weisen häufig den Nachteil auf, dass der Komfort relativ gering ist und/oder die Sättel ein hohes Gewicht aufweisen.

Ein Fahrradsattel mit den Merkmalen des Oberbegriffs des Anspruchs 1 ist aus DE 20 2005 007 672 bekannt.

Aufgabe der Erfindung ist es einen Fahrradsattel mit guten Komforteigenschaften zu schaffen.

Die Lösung der Aufgabe erfolgt erfindungsgemäß durch einen Fahrradsattel gemäß Anspruch 1.

Der erfindungsgemäße Fahrradsattel weißt eine Sattelschale auf, wobei eine Oberseite der Sattelschale mit einem Sattelpolster verbunden ist. Ferner weist der Sattel ein Sattelgestell zur Verbindung mit einem Sattelrohr auf, wobei eine derartige Verbindung möglicherweise über ein Zwischenelement zum jeweiligen Fixieren des Sattelgestells oder eine andere Verbindung erfolgt. Bei dem erfindungsgemäßen Fahrradsattel ist ein vorderes Ende des Sattelgestell, das heißt dasjenige Ende des Sattels, welches bei dem montierten Sattel in Fahrtrichtung weist, mit der Sattelschale im Bereich der Sattelspitze verbunden. Die Verbindung erfolgt hierbei insbesondere mit einer Unterseite der Sattelschale. Ein hinteres Ende des Sattelgestells, das heißt, dass im montierten Zustand entgegen der Fahrtrichtung weisendes Ende des Sattelgestells ist mit einem Halteelement verbunden. Zwischen dem Halteelement und der Sattelschale ist ein Dämpfungselement angeordnet. Insbesondere ist das Dämpfungselement mit einer Unterseite der Sattelschale und einer Oberseite des Halteelements verbunden. Erfindungsgemäß ist das Dämpfungselement flächig mit einer Unterseite der Sattelschale verbunden. Hierdurch ist es möglich, dass eine gute Dämpfung und auch Beweglichkeit der Sattelschale gegenüber dem Halteelement erfolgen kann. Insbesondere die beim Treten auftretenden seitlichen Kippbewegungen des Beckens können von der Sattelschale gut in das Dämpfungselement übertragen und von diesem gedämpft werden. Hierdurch ist der Sitzkomfort erheblich verbessert.

Zur weiteren Verbesserung des Komforts ist es bevorzugt, dass sich das Dämpfungselement über die gesamte Breite der Sattelschale erstreckt. Die Breite der Sattelschale ist hierbei senkrecht zur Linksrichtung des Sattels, die im montierten Zustand der Fahrtrichtung entspricht. Insbesondere erstreckt sich das Dämpfungselement über die gesamte Breite im Sitzbereich der Sattelschale, das heißt in dem Bereich in dem insbesondere die Sitzknochen des Benutzers auf der Oberseite der Sattelschale aufliegen. In Längsrichtung ist es bevorzugt, dass das Dämpfungselement im Sitzbereich des Sattels, jedoch nicht im Mittelbereich und auch nicht in der Sattelspitze angeordnet ist. Bezogen auf die Länge des Sattels erstreckt sich das Dämpfungselement somit über ca. ein Viertel bis ein Drittel der Gesamtlänge des Sattels.

Um eine gute Übertragung von Kräften und Momenten von der Sattelschale auf das Dämpfungselement zu ermöglichen ist es bevorzugt, dass zumindest eine der beiden Seitenflächen des Dämpfungselements gekrümmt ausgebildet ist. Die Seitenflächen des Dämpfungselements sind diejenigen Flächen, die beim montierten Fahrradsattel nach links und rechts weisen. Bevorzugt ist es, dass beide Seitenflächen gekrümmt ausgebildet sind. Besonders bevorzugt ist es, dass eine doppelte Krümmung vorgesehen ist, sodass im Querschnitt die Seitenfläche im Wesentlichen S-förmig ausgebildet ist. Bevorzugt ist es hierbei, dass die Krümmung ausgehend vom Halteelement in Richtung des Sattelelements zunächst nach innen erfolgt, sodass eine konkave Krümmung vorgesehen ist. Hierin schließt sich so eine konvexe Krümmung an, sofern eine doppelt gekrümmte Seitenfläche vorgesehen ist.

In einer bevorzugten Weiterbildung der Erfindung ist auch die Rückseite des Dämpfungselements gekrümmt, insbesondere doppelt gekrümmt entsprechend der Seitenflächen. Die Rückseite des Dämpfungselements ist hierbei diejenige Seite, die im montierten Zustand entgegen der Fahrtrichtung, das heißt nach Hinten weist.

Die Sattelschale weist vorzugsweise eine gebogene beziehungsweise geschwungene Außenkontur auf. Bevorzugt ist es, dass eine Seitenkante der Seitenflächen, die in Richtung der Sattelschale weist eine entsprechende Kontur aufweist. Dies ist vorzugsweise bei beiden Seitenflächen sowie in besonderer bevorzugter Ausführungsform auch bei der Rückseite der Fall.

Bei einer weiteren bevorzugten Ausführungsform ist die Breite des Halteelements, das heißt die Breite quer zur Längsrichtung des Sattels kleiner als die Breite der Sattelschale in diesem Bereich, d.h. im Sitzbereich. In Draufsicht ist das Halteelement somit nicht sichtbar. Da es in bevorzugter Ausführungsform auch nicht über eine rückwärtige Kante der Sattelschale vorsteht.

Bei einer weiteren besonders bevorzugten Ausführungsform entspricht die Breite des Dämpfungselements im Wesentlichen der Breite des Halteelements an einer Anlagefläche zwischen dem Halteelement und dem Dämpfungselement. Das Dämpfungselement liegt somit vorzugsweise vollflächig an einer Oberseite des Halteelements, beziehungsweise an der entsprechenden Anlagefläche an. Hier ist wiederum eine gute Übertragung von Kräften gewährleistet.

Die Breite des Dämpfungselements nimmt in einer weiteren bevorzugten Ausführungsform ausgehend von dem Halteelement in Richtung der Sattelschale zu. Das Dämpfungselement das vorzugsweise vollflächig an der Sattelschale anliegt begünstigt somit in Richtung des Halteelements eine gute Übertragung von Kräften und Momenten. Ferner kann eine gute Dämpfung von Kräften und Momenten erzielt werden. Dies erfolgt insbesondere aufgrund der vorzugsweise gekrümmten Seitenflächen und der vorzugsweise gekrümmten Rückseite.

Bei einer weiteren bevorzugten Ausführungsform weist das Dämpfungselement eine Greiföffnung auf die insbesondere in der Rückseite angeordnet beziehungsweise an der Rückseite des Dämpfungselements offen ist. Hierdurch kann das Fahrrad auf einfache Weise angehoben werden. Um eine Belastung der Verbindungsfläche zwischen dem Halteelement und dem Dämpfungselement zu vermeiden oder zumindest zu verringern ist es bevorzugt, dass in der Greiföffnung ein Greifelement angeordnet ist, dass mit dem Halteelement verbunden ist. Ebenfalls kann das Greifelement einstückig mit dem Halteelement ausgebildet sein.

Das Halteelement ist im Sitzbereich des Sattels ausschließlich über das Dämpfungselement mit der Sattelschale verbunden. Im Sitzbereich erfolgt somit das Übertragen von Kräften und Momenten von der Sattelschale zunächst stets auf das Dämpfungselement und erst von diesem auf das Halteelement. Eine Verbindung zwischen der Sattelschale und dem Sattelgestell ist ausschließlich im vorderen Bereich, das heißt im Bereich der Sattelspitze vorgesehen, wobei hier eine unmittelbare Verbindung zwischen der Sattelschale und dem Sattelgestell realisiert ist. Im hinteren Bereich ist die Verbindung zwischen der Sattelschale und dem Sattelgestell entkoppelt durch das dazwischen angeordnete Dämpfungselement. Eine weitere Verbindung zwischen Sattelschale und Sattelgestell besteht vorzugsweise nicht.

Das Dämpfungselement ist elastisch verformbar. Hierbei ist es insbesondere möglich, zur Ausgestaltung von Sätteln mit unterschiedlichen Komforteigenschaften Dämpfungselement aus unterschiedlichem Material vorzusehen. Bevorzugt werden thermoplastische Dämpfungselemente (TPE) eingesetzt. Bevorzugt ist die Verwendung von Schäumen, wie PU-Schäumen. Insbesondere sind geschlossenporige Schäume bevorzugt. Das Dämpfungselement weist insbesondere TPU (thermoplastisches Polyurethan) auf und ist besonders bevorzugt aus diesem Material hergestellt. Besonders geeignet ist hierfür das von der Firma BASF unter dem Produktnamen "Infinergy" hergestellte Material. Verfahren zur Herstellung von TPU sind beispielsweise in EP 692 510, WO 00/44821, EP 11 74 459 und EP 11 74 458 beschrieben. Ferner ist es bevorzugt, dass das Dämpfungselement aus EVA (Ethylenvinylacetat) hergestellt ist, bzw. EVA aufweist. Ferner können als Materialien EPP (expandiertes Polypropylen) und EPE (expandiertes Polyethylen) verwendet werden. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des Dämpfungselements erzielt werden. Auch ist es möglich, die entsprechenden Materialien in unterschiedlichen Bereichen stärker zu verdichten, so dass hierdurch die Dämpfungs- und Bewegungseigenschaften beeinflusst werden können.

Des Weiteren ist als Material für das Dämpfungselement ein thermoplastischer, dämpfender Kugelschaum geeignet. Ein derartiger Schaum wird von der Firma Sekisui unter dem Produktnamen "ELASTIL" angeboten. Dabei handelt es sich insbesondere um einen geschlossenzelligen Schaum. In bevorzugter Ausführungsform weist das Dämpfungselement erfindungsgemäß einen thermoplastischen dämpfenden Kugelschaum wie insbesondere Elastil auf oder ist aus diesem hergestellt. Möglich ist auch eine Kombination mit den anderen beschriebenen, für die Ausbildung des Dämpfungselements geeigneten Materialien.

Ein weiteres gut geeignetes Material zur Ausbildung des Dämpfungselements ist ein Polyester-basiertes PU-Material. Besonders geeignet ist hierbei das von der Firma BASF unter dem Markennamen "Elastopan" angebotene Material. Vorzugsweise weist das Dämpfungselement ein derartiges Material auf oder ist aus diesem hergestellt, wobei es wiederum möglich ist, dieses Material mit anderen beschriebenen Materialien zu kombinieren.

Erfindungsgemäß ist es, dass das Dämpfungselement einen oder mehrere Partikelschäume aufweist und aus einem oder mehreren Partikelschäumen hergestellt ist. Als Grundmaterial sind hierbei E-TPU, EPP, EPS, EPE oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Das Dämpfungselement weist insbesondere in einem Sitzbereich des Sattels ein Dämpfungsmodul von 0,1 bis 10 MPa, insbesondere 0,1 bis 5 MPa und besonders bevorzugt 0,1 bis 1,0 MPa auf. Das besonders bevorzugte Material Infinergy E-TPU weist ein Dämpfungsmodul von 0,1 bis 0,5 MPa auf.

Des Weiteren ist es besonders bevorzugt, dass das Dämpfungselement aufgrund seiner geringen Dichte ein geringes Gewicht aufweist. Insbesondere weist das Dämpfungselement eine Dichte von weniger als 1 g/cm³, besonders bevorzugt weniger als 0,5 g/cm³, und insbesondere weniger als 0,2 g/cm³ auf. Eines der besonders bevorzugten Materialien, das Material Elastil, weist eine Dichte im Bereich von 0,05 bis 0,2 g/cm³ auf.

Das Reboundverhalten des Dämpfungselements liegt vorzugsweise im Bereich von vorzugsweise mehr als 30%, insbesondere mehr als 40% und besonders bevorzugt mehr als 50% auf.

Das Halteelement und/oder die Sattelschale sind vorzugsweise aus steiferem Material hergestellt als das Dämpfungselement. Bevorzugt ist zur Herstellung des Halteelements und/oder der Sattelschale die Verwendung von Kunststoff, der gegebenenfalls faserverstärkt sein kann. Das Halteelement und/oder das Sattelelement weisen vorzugsweise PP, Polyamide wie PA6 oder PA12 auf oder sind aus diesen Materialien hergestellt. Das Dämpfungselement des Halteelements und der Sattelschale liegt vorzugsweise im Bereich von 1000 bis 10000 MPa, vorzugsweise 2500 bis 6.000 MPa und besonders bevorzugt im Bereich von 3000 bis 5000 MPa. Bevorzugt ist die Verwendung von PP (E-Modul: 1100 bis 1450 MPa), PP GF20 (E-Modul: ca. 2900 MPa) und/oder PA6 GF15 (E-Modul: 4500 bis 6500 MPa).

Nachfolgend wird die Erfindung anhand einer bevorzugten Ausführungsform unter Bezugnahme auf die anliegenden Zeichnungen näher erläutert.

Es zeigen:

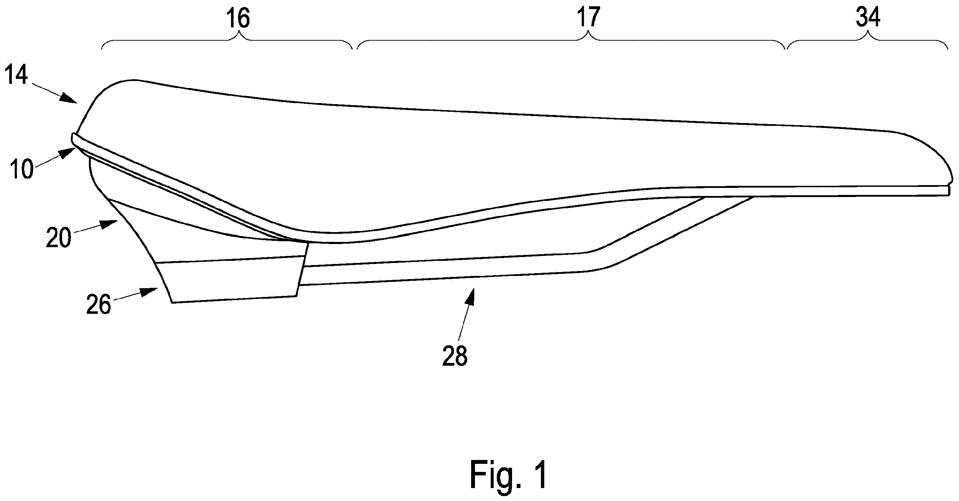

- Figur1: eine schematische Seitenansicht eines erfindungsgemäßen Fahrradsattels,

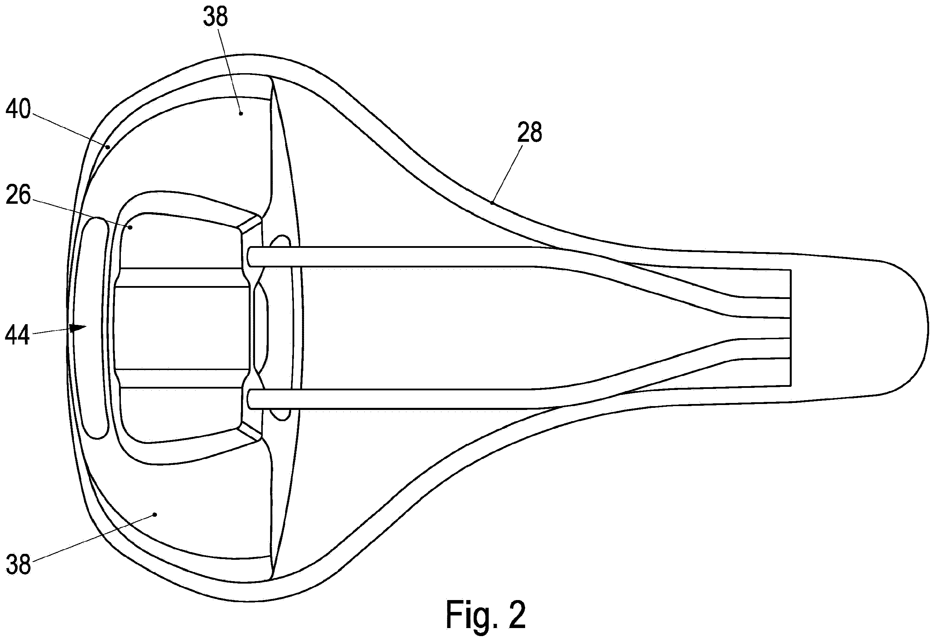

- Figur 2: eine schematische Ansicht des Fahrradsattels von unten,

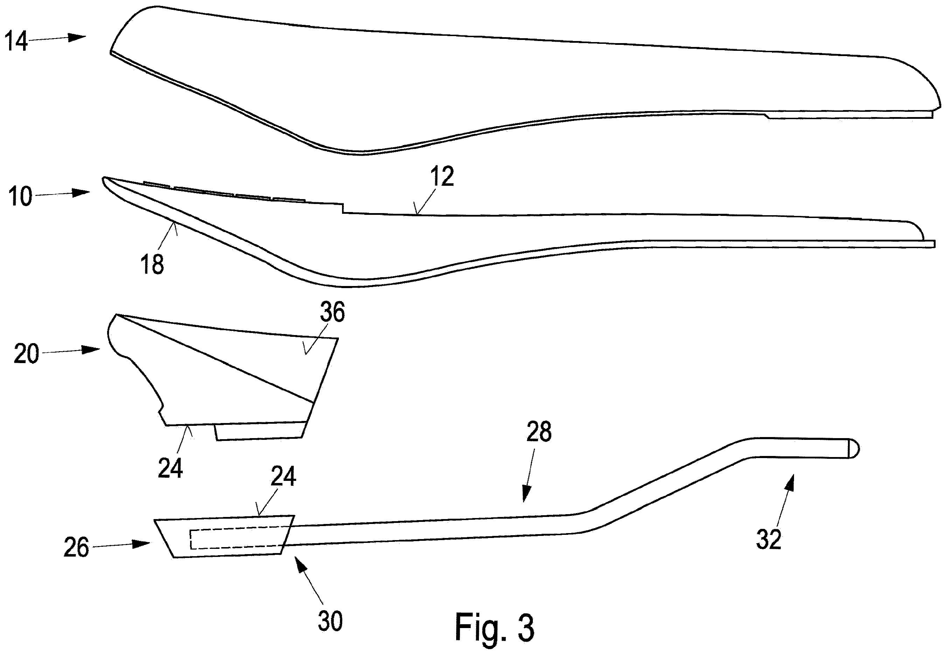

- Figur 3: eine schematische Seitenansicht der Einzelteile eines Fahrradsattels und
- Figur 4: eine schematische perspektivische Ansicht der Einzelteile des Fahrradsattels.

Der Fahrradsattel weist eine Sattelschale 10 auf, wobei mit einer Oberseite 12 der Sattelschale 10 ein Sattelpolster 14 verbunden ist. In einem Sitzbereich 16, das heißt in dem Bereich in dem der Benutzer üblicherweise auf dem Sattel sitzt, ist mit einer Unterseite 18 der Sattelschale 10 ein Dämpfungselement 20 verbunden. Das Dämpfungselement 20 ist über eine Auflagefläche 22 mit einer Auflagefläche 24 eines Halteelements 26 verbunden. Ferner weist der Sattel ein Sattelgestell 28 auf, wobei ein hinteres Ende 30 des Sattelgestells 28 mit dem Halteelement 26 und ein vorderes Ende 32 des Sattelgestells 28 mit einer Unterseite 18 der Sattelschale 10 im Bereich einer Sattelspitze 34 verbunden ist.

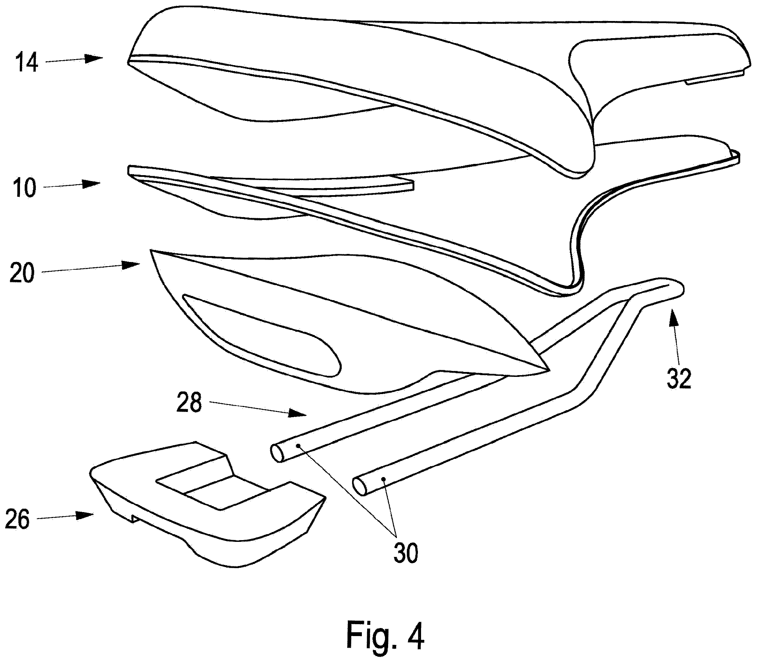

Das Dämpfungselement 20, das insbesondere aus einem Partikelschaum wie dem Produkt Infinegy oder der Gleichen hergestellt ist, ist mit einer Oberseite 36 vollflächig an der entsprechenden Unterseite 18 der Sattelschale angeordnet, beziehungsweise liegt vollständig an. Die Verbindung erfolgt durch ein Ankleben des Dämpfungselements an der Unterseite 18 der Sattelschale oder durch ein adhäsives Verbinden während des Herstellungsprozesses. Die Oberseite 36 ist, wie insbesondere in Figur 4 ersichtlich, konvex gekrümmt, wobei die Krümmung der Unterseite 18 der Sattelschale 10 in diesem Bereich entspricht.

Im dargestellten Ausführungsbeispiel sind die beiden einander gegenüberliegenden Seitenflächen 38 des Dämpfungselements 20 doppelt gekrümmt. Ebenso ist die Rückseite 40 des Dämpfungselements 20 im dargestellten Ausführungsbeispiel doppelt gekrümmt. Ausgehend von dem Halteelement 26 sind sowohl die Seitenflächen 38 als auch die Rückseite 40 zunächst konkav gekrümmt, wobei diese Krümmung dann in eine konvexe Krümmung übergeht, die an der Unterseite 18 der Sattelschale 10 endet.

Eine in Richtung der Sattelschale 10 weisende Seitenkante 42 des Dämpfungselements 20 weist, um eine möglichst großflächige volle Anlage des Dämpfungselements 20 an der Unterseite 18 der Sattelschale 10 zu ermöglichen, im wesentlichen eine der Sattelschale 10 identische Außenkontur auf.

Desweiteren weist im dargestellten Ausführungsbeispiel das Dämpfungselement 20 in der Rückseite 40 eine Greiföffnung 44 auf. In der Greiföffnung 44 kann ein Greifelement angeordnet sein, das in den Figuren nicht dargestellt ist. Ein derartiges Greifelement kann insbesondere mit dem Halteelement 26 verbunden oder einstückig mit diesem ausgebildet sein. Hierdurch ist die auf die beiden Anlageflächen 22 und 24 wirkende Kraft beim Anheben des Fahrrads verringert und insbesondere ein Lösen dieser Verbindung vermieden ist.

Das Sattelgestell 28 ist am vorderen Ende 32 über bekannte Halteelemente, Ausnehmungen und der Gleichen an der Unterseite 18 der Sattelschale 10 befestigt. Das hintere Ende 30 ist in dem dargestellten Ausführungsbeispiel in Öffnungen des Halteelements 26 eingesteckt, insbesondere können die beiden stegförmigen hinteren Enden des Sattelgestells 28 in den Öffnungen des Haltelements 26 verklebt sein.

## Patentansprüche

1. Fahrradsattel mit
einer Sattelschale (10),
einem mit einer Oberseite (12) der Sattelschale (10) verbundenen Sattelpolster (14),
einem Sattelgestell (28) dessen vorderes Ende (32) unmittelbar mit der Sattelschale (10) im Bereich einer Sattelspitze (34) verbunden ist, wobei eine solche unmittelbare Verbindung zwischen der Sattelschale (10) und dem Sattelgestell (28) ausschließlich im Bereich der Sattelspitze (34) vorgesehen ist,
einem mit einem hinteren Ende (30) des Sattelgestells (28) verbundenen Halteelement (26) und
einem zwischen dem Halteelement (26) und der Sattelschale (10) angeordneten Dämpfungselement (20),
wobei das Dämpfungselement (20) flächig mit einer Unterseite (18) der Sattelschale (10) verbunden ist,
**dadurch gekennzeichnet, dass**
das Dämpfungselement (20) aus einem Partikelschaum hergestellt ist, der als Grundmaterial vorzugsweise ein E-TPU, EPP, EPS und/oder EPE aufweist, und
das Halteelement (26) im Sitzbereich (16) ausschließlich über das Dämpfungselement (20) mit der Sattelschale (10) verbunden ist.

2. Fahrradsattel nach Anspruch 1 **dadurch gekennzeichnet, dass** das Dämpfungselement (20) sich über die gesamte Breite der Sattelschale (10) erstreckt.

3. Fahrradsattel nach Anspruch 1 oder 2 **dadurch gekennzeichnet, dass** das Dämpfungselement (20) gekrümmte insbesondere doppelt gekrümmte Sattelseitenflächen (38) aufweist.

4. Fahrradsattel nach einem der Ansprüche 1 bis 3 **dadurch gekennzeichnet, dass** das Dämpfungselement eine gekrümmte insbesondere doppelt gekrümmte Rückseite (40) aufweist.

5. Fahrradsattel nach Anspruch 3 oder 4 **dadurch gekennzeichnet, dass** eine in Richtung der Sattelschale (10) weisende Seitenkante (42) mindestens einer, insbesondere beider Seitenflächen (38) eine der Kontur der Sattelschale (10) in diesem Bereich entsprechende Kontur aufweist.

6. Fahrradsattel nach einem der Ansprüche 3 bis 5 **dadurch gekennzeichnet, dass** eine in Richtung der Sattelschale (10) weisende Seitenkante (42) der Rückseite (40) eine der Kontur der Sattelschale (10) in diesem Bereich entsprechende Kontur aufweist.

7. Fahrradsattel nach einem der Ansprüche 1 bis 6 **dadurch gekennzeichnet, dass** das Dämpfungselement (20) im Sitzbereich (16) des Sattels angeordnet ist.

8. Fahrradsattel nach einem der Ansprüche 1 bis 7 **dadurch gekennzeichnet, dass** die Breite des Halteelements (26) größer als die Breite der Sattelschale (10) im Sitzbereich (16) ist.

9. Fahrradsattel nach einem der Ansprüche 1 bis 8 **dadurch gekennzeichnet, dass** die Breite des Halteelements (26) im Wesentlichen der Breite des Dämpfungselements (20) an einer Anlagefläche (22, 24) zwischen dem Halteelement (26) und dem Dämpfungselements (20) entspricht.

10. Fahrradsattel nach einem der Ansprüche 1 bis 9 **dadurch gekennzeichnet, dass** die Breite des Dämpfungselements (20) ausgehend vom Halteelement (26) in Richtung der Sattelschale (10) zunimmt.

11. Fahrradsattel nach einem der Ansprüche 1 bis 10 **dadurch gekennzeichnet, dass** das Dämpfungselement (20) insbesondere in seiner Rückseite (40) eine Greiföffnung (44) aufweist.

12. Fahrradsattel nach Anspruch 11 **dadurch gekennzeichnet, dass** in der Greiföffnung (44) ein mit dem Halteelement (26) zur Kraftübertragung verbundenes Greifelement vorgesehen ist.

## Claims

1. A bicycle saddle comprising
a saddle shell (10),
a saddle cushion (14) connected with a top surface (12) of the saddle shell (10),
a saddle frame (28) whose front end (32) is directly connected with the saddle shell (10) in the region of a saddle tip (34), wherein such a direct connection between the saddle shell (10) and the saddle frame (28) is solely provided in the region of the saddle tip (34),
a holding element (26) connected with a rear end (30) of the saddle frame (28), and
a damping element (20) arranged between the holding element (26) and the saddle shell (10),
wherein the damping element (20) is in surface connection with a lower side (18) of the saddle shell (10),
**characterized in that**
the damping element (20) is made of a particle foam which preferably comprises an E-TPU, EPP, EPS and/or EPE as base material, and
the holding element (26) is connected with the saddle shell (10) in the seating are (16) solely through the damping element (20).

2. The bicycle saddle of claim 1, **characterized in that** the damping element (20) extends across the entire width of the saddle shell (10).

3. The bicycle saddle of claim 1 or 2, **characterized in that** the damping element (20) has curved, in particular double-curved saddle side surfaces (38).

4. The bicycle saddle of one of claims 1 to 3, **characterized in that** the damping element has a curved, in particular double-curved rear side (40).

5. The bicycle saddle of claim 3 or 4, **characterized in that** a lateral edge (42) of at least one, in particular of both side surfaces (38), which lateral edge is directed towards the saddle shell (10), has a contour corresponding to the contour of the saddle shell (10) in this region.

6. The bicycle saddle of one of claims 3 to 5, **characterized in that** a lateral edge (42) of the rear side (40), which lateral edge is directed towards the saddle shell (10), has a contour corresponding to the contour of the saddle shell (10) in this region.

7. The bicycle saddle of one of claims 1 to 6, **characterized in that** the damping element (20) is arranged in the seating area (16) of the saddle.

8. The bicycle saddle of one of claims 1 to 7, **characterized in that** the width of the holding element (26) is larger than the width of the saddle shell (10) in the seating area (16).

9. The bicycle saddle of one of claims 1 to 8, **characterized in that** the width of the holding elements (26) substantially corresponds to the width of the damping element (20) at a contact surface (22, 24) between the holding element (26) and the damping element (20).

10. The bicycle saddle of one of claims 1 to 9, **characterized in that** the width of the damping element (20) increases from the holding element (26) towards the saddle shell (10).

11. The bicycle saddle of one of claims 1 to 10, **characterized in that** the damping element (20) has a grip opening (44) in particular in its rear side (40).

12. The bicycle saddle of claim 11, **characterized in that** a grip element is provided in the grip opening (44), which grip element is connected with the holding element (26) for force transmission.

## Revendications

1. Selle de bicyclette dotée
d'une coque de selle (10),
d'un rembourrage de selle (14) relié à une face supérieure (12) de la coque de selle (10),
d'un rail de selle (28) dont l'extrémité avant (32) est relié à la coque de selle (10) dans la zone d'un bec de selle (34),
d'un élément de maintien (26) relié directement à une extrémité arrière (30) du rail de selle (28), une telle liaison directe entre la coque de la selle (10) et le rail de selle (28) étant prévue exclusivement dans la zone du bec de selle (34),
d'un élément de maintien (26) relié à une extrémité arrière (30) du rail de selle (28), et
d'un élément amortisseur (20) agencé entre l'élément de maintien (26) et la coque de selle (10),
dans laquelle l'élément amortisseur (20) est relié à plat à une face inférieure (18) de la coque de selle (10),
**caractérisée en ce que**
l'élément amortisseur (20) est fabriqué en mousse particulaire, laquelle comporte de préférence comme matériau de base un PUT-E, un PPE, un PSE et/ou un PEE, et
l'élément de maintien (26) est relié à la coque de selle (10) dans la zone d'assise (16) exclusivement par l'élément amortisseur (20).

2. Selle de bicyclette selon la revendication 1, **caractérisée en ce que** l'élément amortisseur (20) s'étend sur toute la largeur de la coque de selle (10).

3. Selle de bicyclette selon la revendication 1 ou 2, **caractérisée en ce que** l'élément amortisseur (20) comporte des surfaces latérales de selle (38) recourbées, en particulier doublement recourbées.

4. Selle de bicyclette selon l'une des revendications 1 à 3, **caractérisée en ce que** l'élément amortisseur comporte une face arrière (40) recourbée, en particulier doublement recourbée.

5. Selle de bicyclette selon la revendication 3 ou 4, **caractérisée en ce qu'**un bord latéral (42), orienté en direction de la coque de selle (10), d'au moins une, en particulier des deux surfaces latérales (38), présente un contour correspondant au contour de la coque de selle (10) dans cette zone.

6. Selle de bicyclette selon l'une des revendications 3 à 5, **caractérisée en ce qu'**un bord latéral (42) de la face arrière (40) orienté en direction de la coque de selle (10) présente un contour correspondant au contour de la coque de selle (10) dans cette zone.

7. Selle de bicyclette selon l'une des revendications 1 à 6, **caractérisée en ce que** l'élément amortisseur (20) est agencé sur la zone d'assise (16) de la selle.

8. Selle de bicyclette selon l'une des revendications 1 à 7, **caractérisée en ce que** la largeur de l'élément de maintien (26) est supérieure à la largeur de la coque de selle (10) dans la zone d'assise (16).

9. Selle de bicyclette selon l'une des revendications 1 à 8, **caractérisée en ce que** la largeur de l'élément de maintien (26) correspond sensiblement à la largeur de l'élément amortisseur (20) sur une surface d'appui (22, 24) entre l'élément de maintien (26) et l'élément amortisseur (20) .

10. Selle de bicyclette selon l'une des revendications 1 à 9, **caractérisée en ce que** la largeur de l'élément amortisseur (20) augmente dans la direction de la coque de selle (10) à partir de l'élément de maintien (26).

11. Selle de bicyclette selon l'une des revendications 1 à 10, **caractérisée en ce que** l'élément amortisseur (20) comporte une ouverture d'engagement (44), en particulier dans sa face arrière (40).

12. Selle de bicyclette selon la revendication 11, **caractérisée** en qu'un élément d'engagement relié à l'élément de maintien (26) pour la transmission de force est prévu dans l'ouverture d'engagement (44).
